# EUROPEAN PATENT SPECIFICATION

(11) **EP 1 807 739 B1**
(45) Date of publication and mention of the grant of the patent: **02.04.2014**
(21) Application number: 05825045.7
(22) Date of filing: 01.11.2005
(51) Int. Cl.: G05B 15/00, G05B 15/02, G07C 11/00, G06Q 10/00

(54) **LINE MONITORING SYSTEM AND METHOD**
SYSTEM UND VERFAHREN ZUR LEITUNGSÜBERWACHUNG
SYSTEME ET PROCEDE DE SURVEILLANCE DE FILE D'ATTENTE

(30) Priority: 02.11.2004 US 624430 P
(43) Date of publication of application: 18.07.2007
(73) Proprietor: Tyco Fire & Security GmbH, 8212 Neuhausen am Rheinfall (CH)
(72) Inventor: SALCEDO,, David M., Lake Worth, FL 33467 (US)
(74) Representative: Hafner, Dieter
(86) International application number: PCT/US2005/039487
(87) International publication number: WO 2006/052545

(56) References cited:
- EP-A2- 1 324 248
- US-A- 5 097 328
- US-A1- 2002 154 218
- US-B2- 6 453 056
- US-B2- 6 559 769

## Description

### FIELD

This disclosure relates to a line monitoring system and method that may be used to monitor objects in a line.

### BACKGROUND

Lines may form in various places for various reasons. People may form lines, for example, at point of sale locations or other customer service locations at retail stores. People may also form lines at other establishments such as an outdoor entertainment area waiting to pay for entrance to the area or waiting for a particular attraction of the area. Other objects such as vehicles may also form lines, for example, at toll booths, gas stations, and other establishments. Waiting in line is generally considered to be undesirable, and establishments may want to manage lines, for example, to improve the customer's experience.

Obtaining information, such as the number of people or objects in line, the average wait time in a line, or the volume of people or objects moving through a line, may be useful in managing the flow of people or other objects through lines. Observation of a line is one way to ascertain the number of people or other objects in line at a given moment. One drawback of such observation is that it requires the expenditure of personnel time and resources to gather line count data. Observation of a line also may not be adequate to provide other line information such as average wait time and/or the volume of people or objects moving through a line.

US 5,097,328 discloses a remote sensing system suitable for use in businesses which include queues and/or servers. The sensing system comprises a camera which captures successive images of the area to be monitored. The system analyzes pixel data from defined sub-areas and is able to monitor a queue by defining one or more of said sub-areas at the queue entrance and at the queue exit. Motion across these areas moving into the queue at the number of people waiting in line by motion moving out of the queue substracts. Therefore, the sensing system according to the disclosure of US 5,097,328 is able to sense the number of waiting people, but not their position with regard to a line.

EP 1 324 248 A2 discloses a schedule distribution system and schedule making method detecting the number of people waiting in a queue for entering or using a specific place. The detection is performed by observing the length of the queue or by extracting the number of people who made a reservation by entering their names on a waiting list. To observe the length of a queue sensors for detecting the existence of people with infrared rays, for example, are placed at an entrance of each specific place. By knowing which of these sensors is the last to detect the existence of people, it is possible to detect the length of the queue.

It is an object of the invention to provide a method and a system to define, whether people present in a surveillance area form a queue or do not form a queue, with other words are queuing or are only designated to be potentially in a tine because they may be only transitorily moving through a reference area.

### BRIEF DESCRIPTION OF THE DRAWINGS

Features and advantages of embodiments of the claimed subject matter will become apparent as the following Detailed Description proceeds, and upon reference to the Drawings, where like numerals depict like parts, and in which:
FIG. 1 is a block diagram of a line monitoring system, consistent with one embodiment of the present invention;
FIGS. 2-5 are images illustrating one method of object extraction that may be used to provide object data in the line monitoring system and method, consistent with one embodiment of the present invention;
FIG. 6 is a flow chart illustrating a line monitoring method, consistent with one embodiment of the present invention;
FIGS. 7-14 are schematic diagrams illustrating behavior patterns that may be used to determine if an object is in line, consistent with embodiments of the present invention;
FIG 15 is a flow chart illustrating one example of an object analysis method to determine objects that are in a line, consistent with one embodiment of the present invention;
FIG. 16 is a flow chart illustrating an exemplary method for handling the first new object in the object analysis method shown in FIG. 15; and
FIG. 17 is a flow chart illustrating an exemplary method for handling additional new objects in the object analysis method shown in FIG. 15.

Although the following Detailed Description will proceed with reference being made to illustrative embodiments, many alternatives, modifications, and variations thereof will be apparent to those skilled in the art. Accordingly, it is intended that the claimed subject matter be viewed broadly.

### DETAILED DESCRIPTION

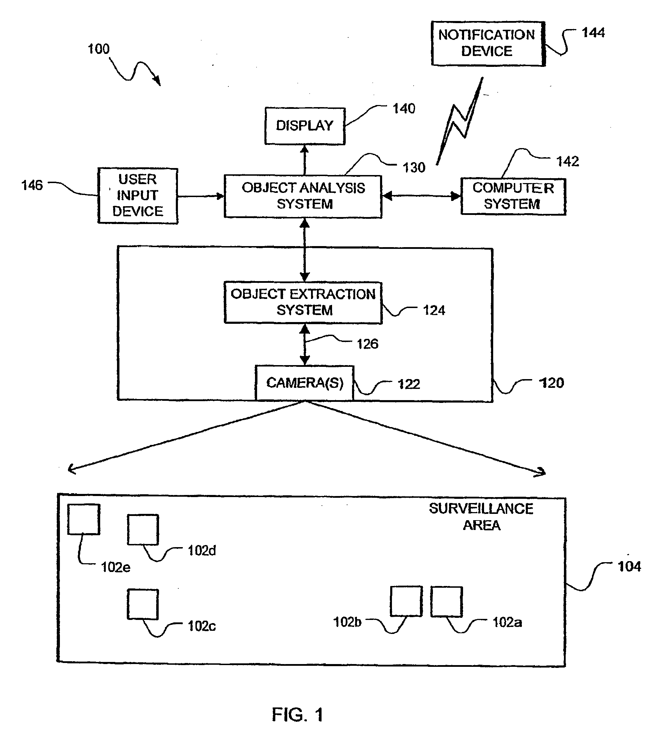

Referring to FIG. 1, a line monitoring system 100, consistent with one embodiment of the present invention, may be used to monitor a line formed by objects 102a-102e in a surveillance area 104. The objects 102a-102e may include any objects capable of forming a line including, but not limited to, people and vehicles. The line monitoring system 100 may be used at any establishment or location at which objects may form a line including, but not limited to, retail stores, banks, amusement parks, entertainment venues, sporting venues, ticket windows, gas stations, toll booths, and car washes. The surveillance area 104 may include a line starting point and any area at the establishment or location through which the line may extend. In a retail store, for example, the surveillance area 104 may include a point of sale location where a line generally begins and the area extending from the point of sale location. Although the exemplary embodiment is described in the context of a single line, the line monitoring system 100 may be used to monitor any number of lines.

One embodiment of the line monitoring system 100 may include an object identifying and locating system 120 to identify and locate objects 102a-102e in the surveillance area 104 and an object analysis system 130 to analyze the behavior of the objects and determine if the objects form a line. The object identifying and locating system 120 may generate object data including, but not limited to, object identifying data (e.g., an ID number) and object locating data (e.g., coordinates). The object analysis system 130 may receive the object data and analyze the position and movement of the objects to determine if objects exhibit behavior indicating that the objects should be designated as being in a line, as will be described in greater detail below. As shown, objects 102a, 102b may be designated as in a line, while objects 102c-102e may not yet be designated as in a line.

The object analysis system 130 may also determine one or more line statistics such as a count of the objects in a line, the wait time for objects in a line, the average time to service customers (e.g., in multiple lines), and/or the volume of objects passing through a line during a given time period. The line monitoring system 100 may display the line statistics on a display 140 and may further analyze the line statistics, for example, by comparing line statistics to thresholds (e.g., line count threshold, an average wait time threshold, etc.). The line monitoring system 100 may also provide line statistics to another computer system 142 for further analysis. The line monitoring system 100 and/or the computer system 142 may also communicate with a notification device 144, such as a handheld wireless device, to provide notifications based on line statistics. If a line count exceeds a line count threshold or falls below a line count threshold, for example, a notification may be provided to indicate that another line should be started or a line should be closed. The line monitoring system 100 may also include a user input device 146 to allow a user to provide input, for example, to select a surveillance area, to select desired line statistics, to set desired notification thresholds, and to configure line behavior pattern parameters, as described below.

The line monitoring system 100 may therefore facilitate a variety of line management applications. In a retail store, for example, if there are an excessive number of people in a line at a point of sale location in a retail store, the line monitoring system 100 may trigger an alarm (e.g., on notification device 144) to alert appropriate store personnel of the situation regardless of their location in the retail store. In response, the store personnel may open additional point of sale locations to ease the congestion.

Another application may be to determine the traffic flow through a particular area to see if service providers of the retail store are relatively consistent. This could be utilized to identify the relatively slower service providers who may then be trained in more efficient service techniques. Yet additional applications may calculate the average wait time through the whole line, the average volume of traffic through a particular area, the average volume of traffic though a particular area during a particular time period, and the average time to service an individual customer. Store personnel can utilize the results of these additional applications to improve line management and customer service.

One embodiment of the object identifying and locating system 120 may include one or more cameras 122 to capture one or more images of the surveillance area and an object extraction system 124 to extract objects from the captured images and determine object locations within the surveillance area. The camera(s) 122 may generate one or more image signals representing the captured image of the surveillance area 104. The camera(s) 122 may include cameras known to those skilled in the art such as digital still image or video cameras.

The camera(s) 122 may be situated to focus on the surveillance area 104. Although not shown in the block diagram of FIG. 1, the camera(s) 122 may be positioned above the surveillance area 104. This overhead view of the surveillance area 104 by overhead camera(s) 122 facilitates visual separation of objects 102a-102e to enable optimal differentiation of one object from another object (e.g., one person from another). For indoor applications, such as a retail store, the camera(s) 122 may be installed on the ceiling above a center of the surveillance area 104. For outdoor applications, the camera(s) 122 may be installed on a pole, post, building, or other structure as appropriate to provide a generally overhead view of the surveillance area 104. Although an angled view of the camera(s) is possible, tracking and differentiation may be difficult if the angled view results in one object in line occluding another object in line.

As a line becomes longer, the field of view of the camera(s) 122 may be increased to expand the surveillance area 104 and to capture as many objects in the line as desired. To increase the field of view, for example, the vertical height of the camera(s) 122 may be raised above the surveillance area 104, a wider angle camera lens may be used, and/or a plurality of cameras may be used to provide adjacent views of the surveillance area 104. The use of a plurality of cameras 122 may enable each camera to be mounted lower or closer to the surveillance area 104 to facilitate tracking and differentiation of objects 102a-102e by the object extraction system 124. When a plurality of cameras are utilized, the cameras may be coordinated to track objects moving from the range of one camera to another camera using techniques known to those skilled in the art.

In one embodiment, the object extraction system 124 and the object analysis system 130 may be implemented as one or more computer programs or applications, for example, running on a computer system. The object extraction system 124 and the object analysis system 130 may be separate applications or may be components of a single integrated line monitoring application. The object extraction system 124 and the object analysis system 130 may also be applications running on separate computer systems that are coupled together, for example, by a network connection, a serial connection, or using some other connection. The computer programs or applications may be stored on any variety of machine readable medium (e.g., a hard disk, a CD Rom, a system memory, etc.) and may be executed by a processor to cause the processor to perform the functions described herein as being performed by the object extraction system 124 and the object analysis system 130. Those skilled in the art will recognize that the object extraction system 124 and the object analysis system 130 may be implemented using any combination of hardware, software, and firmware to provide such functionality.

The camera(s) 122 may be coupled to the object extraction system 124 via a path 126, for example, using a wireless connection or a wired connection to the computer system incorporating the object extraction system 124. The camera(s) 122 may provide image signals (e.g., a video feed of the surveillance area 104) to the object extraction system 124 via the path 126. The object extraction system 124 may analyze pixels in the image represented by the image signal and may group the moving pixels together to form image objects corresponding to actual objects 102a-102e in the surveillance area 104. The object extraction system 124 may further identify each object in the image of the surveillance area 104 and provide coordinates specifying the location of each object.

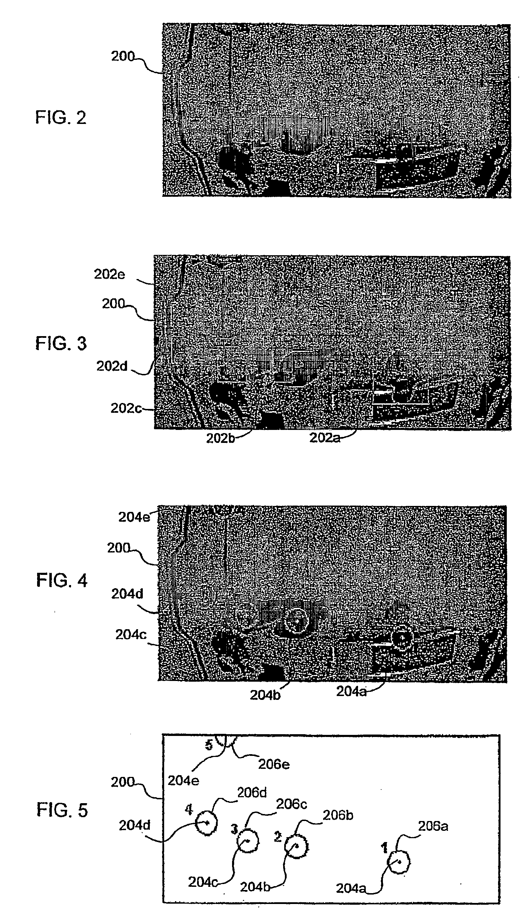

Referring to FIGS. 2-5, one example of a method to identify and locate objects using the object extraction system 124 is described in greater detail. As shown in FIG. 2, an image 200 of the surveillance area 104 may be generated from the image signal provided from the camera(s) 122 to the object extraction system 124. The object extraction system 124 may analyze pixels from the image 200 to extract image objects. Although image 200 is shown as a single static image, the object extraction system 124 may receive an image signal representing a changing or moving image (or series of still images) in which objects in the surveillance area 104 are moving.

In one embodiment where the objects being monitored are people in the surveillance area, the object extraction system 124 may be configured to identify objects that are people. To accurately identify people, the object extraction system 124 may filter out lighting, shadows, reflections, and other anomalies, which may be erroneously identified as people. The object extraction system 124 may utilize tuning parameters to increase the accuracy of object extraction, as is known to those skilled in the art. The tuning parameters may include a lighting threshold, edge detection threshold, and/or grouping criteria. The object extraction system 124 may thus provide the object analysis system 130 with correctly identified people objects to avoid false images or "phantoms" that may confuse the object analysis system 130. Although the object extraction system 124 may provide the majority of the filtering to identify people as objects, the object analysis system 130 may also provide object filtering as well for distinguishing people from other objects, for example, based on the movement or behavior of the objects.

As shown in FIG. 3, moving pixels in the image 200 may be grouped to form pixel groupings 202a-202e corresponding to moving objects (e.g., people) in the surveillance area 104. Areas may be formed around the pixel groupings 202a-202e to bound the pixel groupings 202a-202e. In the illustrated example, the pixel groupings 202a-202e are shown with rectangular areas bounding the pixel groupings 202a-202e, although this is not to be considered a limitation. As shown in FIG. 4, center points 204a-204e of the areas (e.g., rectangular areas) that bound the pixel groupings 202a-202e may be determined. The coordinates of the center points 204a-204e may be determined to identify the coordinates for the corresponding objects (e.g., persons) in the surveillance area 104.

The object extraction system 124 may provide persistency of objects such that objects are consistently identified as the objects move through the image 200 of the surveillance area 104. To accomplish this, the object extraction system 124 may provide an identifier (e.g., an ID number) for each object in the image 200 to associate the image object at that coordinate in the image 200 with a specific corresponding object in the surveillance area. The object extraction system 124 may maintain that identifier as the image object moves.

As shown in FIG. 5, the object data that may be provided from the object extraction system 124 to the object analysis system 130 may include identifying data (e.g., ID numbers) for the image objects 206a-206e extracted from the image 200 and location data for the image objects 206a-206e (e.g., as defined by coordinates for the center points 204a-204e). The object data may be continuously provided from the object extraction system 124 to the object analysis system 130 though various paths including, for example, across a network, across a serial connection, via a hardware device, or via software mechanisms through shared memory or some other software buffering mechanism. The object data may be provided at varying data rates depending, at least in part, on the ability of the object extraction system to generate and communicate such data. In general, faster data rates may improve the accuracy of the object analysis system 130, which analyzes position and movement of the objects within the surveillance area. Although the object extraction system 124 uses graphical information to obtain the object data, as shown in FIGS. 2-5, it is not necessary to transmit the graphical information to the object analysis system 130. Such graphical information may be used in the line monitoring system 100, however, to facilitate monitoring the line.

In addition to providing the object identifying data and object location data of image objects 206a-206e extracted from the surveillance area image 200, the object extraction system 124 may also provide additional parameters or object data to the object analysis system 130. Such object data may include object size, object velocity, and a timestamp for the current location of each object. Such additional parameters may be helpful in some instances, but are not necessary.

Although the exemplary embodiment uses an object extraction system 124 to obtain object identifying and location data, those skilled in the art will recognize that the object identifying and locating system 120 may also include other systems capable of generating object identifying data (e.g., an ID number) and object location data (e.g., coordinates). Examples of such systems include radio frequency identification (RFID) tracking systems and other tracking systems known to those skilled in the art.

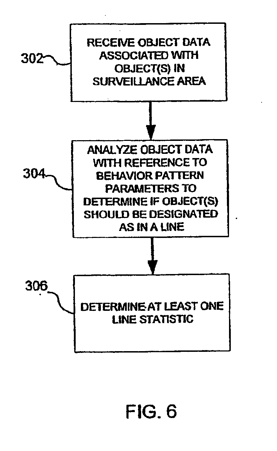

Referring to FIG. 6, one method of monitoring a line using the object analysis system 130 is described. The object analysis system 130 may receive 302 object data including the object identifying data and the object location data associated with objects in the surveillance area. To determine if the objects should be designated as being in a line in the surveillance area, the object analysis system 130 may analyze 304 the object data with reference to one or more line behavior pattern parameters indicative of the behavior of objects in a line. The object analysis system 130 may also determine 306 one or more line statistics such as the number of objects in line, the wait time, and the volume of objects passing through the line.

A number of behavior patterns indicative of objects in a line may be abstracted to various parameters and enumerated as values. The object analysis system 130 may assign default values for each line behavior pattern parameter representative of a behavior pattern. The user input device 146 may also be used by an operator of the object analysis system 130 to adjust the default values of the parameters in order to "tune" the object analysis system 130 for a variety of conditions.

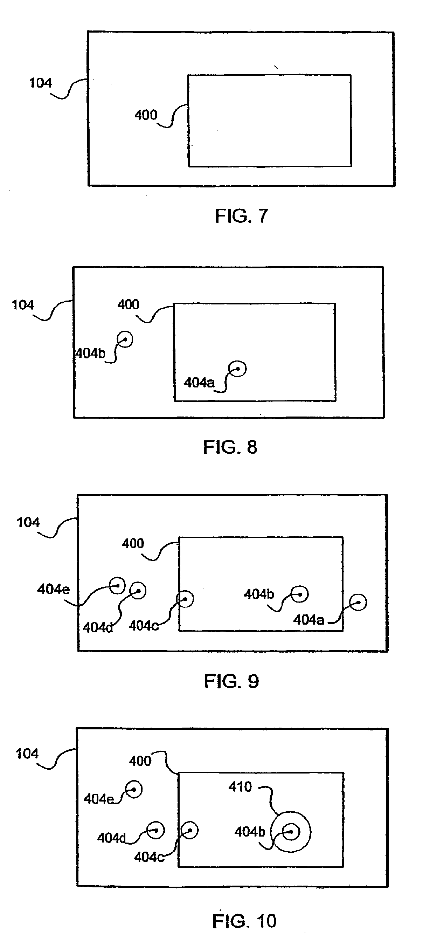

Referring to FIGS. 7-14, different behavior patterns and the associated line behavior pattern parameters are described in greater detail. In general, line behavior pattern parameters may be based on the position of an object and/or the movement of an object indicative of the object being in line. Line behavior pattern parameters may be used to designate an object as being "in line" or "potentially in line" or as being removed from a line.

Objects generally form a line in a designated area extending from a starting point (e.g., a point of sale location). As shown in FIG. 7, a parameter may define a reference area 400 within the surveillance area 104 in which objects are likely to be in line. The reference area 400 may include where the line should start and may also include where the line should end. In one embodiment, the reference area 400 may be defined using values representing one or more pairs of parallel lines. An operator of the object analysis system 130 may input values to define the parameters of the reference area 400 or default values may be provided. The object location data may be compared to the reference area parameters to determine if the object has entered the reference area 400 and should be designated as "in line" or "potentially in line."

When an object enters the reference area 400, the object may be designated as only "potentially in line" because the object may be only transitionally moving through the reference area 400. Therefore, the object analysis system 130 may designate the object 404a as "potentially in line" until the object analysis system 130 makes a determination that the object is actually in line, for example, using other parameters described below. As shown in FIG. 8, for example, a first object 404a that has entered the reference area 400 (e.g., crossed one of the lines defining the reference area 400) may be "potentially in line." As shown in FIG. 9, the first object 404a has left the reference area 400 (e.g., crossed back over one of the lines) and thus was not actually in line. The object analysis system 130 may remove the object from being designated as "potentially in line" once the object leaves the reference area 400.

Other parameters may define movement of an object to determine if an object designated as "potentially in line" should be designated as "in line." Examples of such parameters include a "stillness" parameter and/or a "jitter" parameter. Objects (e.g., people) that enter a line typically stop moving for at least a short period of time. The "stillness" parameter may be defined using one or more values representing a still time period. If the object location data for the object 404a that has entered the reference area 400 indicate that the location of the object has not changed for the still time period, for example, the object analysis system 130 may designate that object as being "in line" as opposed to being "potentially in line." The still time period may be adjustable or tunable by an operator of the object analysis system 130 to take into account different circumstances.

Objects in line may move around within a limited space, and thus may not be perfectly still. The "jitter" parameter may be defined using one or more values representing a limited "jitter" space in which an object may move while in line. As shown in FIG. 10, for example, a boundary 410 may define the jitter space around an object 404b. If the object location data indicates that the object 404b in the reference area 400 moves only within the defined "jitter" space, the object analysis system 130 may designate that object as being "in line" as opposed to being "potentially in line." The jitter parameter may also be tunable to account for different circumstances. The size of the jitter space may be tunable, for example, depending on the location in line (e.g., more jitter at the end than at the beginning), the amount of space to move about in the line, and other factors. In one embodiment, the jitter space may be defined by a circle about the coordinates of the object with a tunable parameter being the radius of the circle. Once an object is designated as being "in line," the stillness and jitter parameters may not be analyzed again for that object unless that particular object leaves the line and returns.

When no objects have yet been designated as "in line", the reference area parameter, the stillness parameter and the jitter parameter may be used to determine when a first new object should be designated as "in line." When at least one object is designated as being "in line," additional objects may then be designated as being "in line" or "potentially in line." Other parameters may define a position of an additional object relative to other objects in line to determine if the additional object should be designated as being "in line" or "potentially in line." These parameters may include a proximity parameter, a behindness parameter, and a cut distance parameter, as described below.

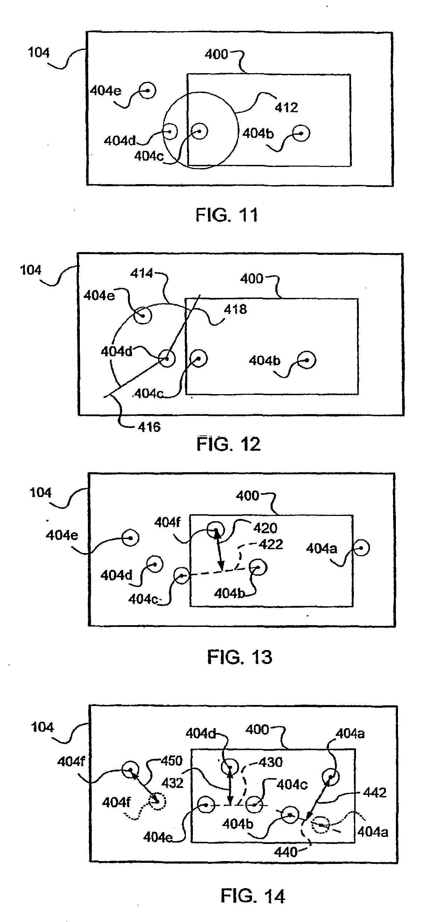

In general, an additional object will join a line at the end. The proximity parameter may be defined using one or more values representing a proximity distance from the last object designated as being in line. If object location data indicates that the additional object is within the proximity distance of the last object, then the object analysis system 130 may designate the object as being "in line" or "potentially in line." As shown in FIG. 11, for example, the proximity distance may be defined by the length of the radius of a circular zone 412 around the last object 404c currently in line and the additional object 404d is within a proximity distance of the last object 404c currently in line. Similar to other parameters, the proximity parameter may be tunable by an operator of the object analysis system 130.

An additional object that enters the line in front of the last object currently in line (e.g., within the proximity distance) may be doing something that causes the object to temporarily move to that position but may not actually be attempting to enter the line. The behindness parameter may be defined using one or more values representing a relative location behind the last object currently in line. If the object location data for an additional object indicates that the additional object is actually "behind" the last object currently in line, the object analysis system 130 may designate the additional object as being "in line" or "potentially in line." As shown in FIG. 12, the behindness parameter may be defined by an angle 414 between lines 416, 418 that originate from the coordinates of the last object 404d currently in line. Therefore, the object analysis system 130 may determine that the additional object 404e is within the proximity distance and behind the last object currently in line. The behindness parameter may be tunable by an operator of the object analysis system 130.

An object may enter a line in front of the last object currently in line if the object attempts to "cut" into the line. The cut distance parameter may be defined using one or more values representing the distance to a line that connects the coordinates of two objects that are currently in line. If object location data indicates that an additional object has moved within the cut distance parameter, the additional object may be designated as "in line" or "potentially in line." As shown in FIG. 13, a cut distance 420 may be relative to the line 422 formed between objects 404b, 404c currently in line and the object 404f is within the cut distance 420. The cut distance parameter may be tunable by an operator of the object analysis system 130.

Even if an additional object may be near a line (e.g., within a proximity or cut distance), the additional object may not be in line, for example, if the object is merely passing by the line. Thus, the proximity parameter, the behindness parameter and the cut parameter may be used to indicate that an additional object is "potentially in line" and the stillness and/or jitter parameters discussed above may be analyzed to determine if the additional objects designated as "potentially in line" should be designated as "in line."

Once an object has joined a line, the object may leave the line at any time. The object analysis system 130 may utilize a deviation distance parameter to determine if an object that has already been designated as "in line" should be removed from the line. The deviation distance parameter may be defined using one or more values representing the distance required for the object to move away from the line before the object is removed from the line. If the object location data indicates that the object moves a distance greater than the deviation distance from the line, the object analysis system 130 may then remove the object that was previously designated as being "in line."

As shown in FIG. 14, the deviation distance may be defined differently for the first object currently in line, the last object currently in line, and the objects between the first and last objects. For objects between the first object 404a and the last object 404f, the deviation distance may be defined as a distance 432 from a line 430 that joins adjacent objects 404c, 404e in line. For example, the object 404d (previously in the middle of the line between objects 404c, 404e) may have a current position that has deviated from the line 430 by at least the deviation distance 432 and thus may be designated as removed from the line.

For the first object 404a currently in line, the deviation distance may be defined as a distance 442 from a line 440 between the last "still" position of the first object 404a (shown in phantom) and the next object 404b in line. The last "still" position of the first object 404a may be the location when the first object last met either the stillness parameter or the jitter parameter. For example, the first object 404a (previously first in line) may have a current position that has deviated from the line 440 by at least the deviation distance 442 and thus may be designated as removed from the line.

For the last object 404f currently in line, the deviation distance may be defined as a distance 450 from the last "still" position of the last object 404f (shown in phantom). The last "still" position of the last object 404f may be the location when the object 404f last met either the stillness parameter or the jitter parameter. Similar to other parameters, the deviation parameter may be tunable by an operator of the object analysis system 130. The deviation parameter may be separately tunable for the first object currently in line, the last object currently in line, and the objects currently in line between the first and last objects.

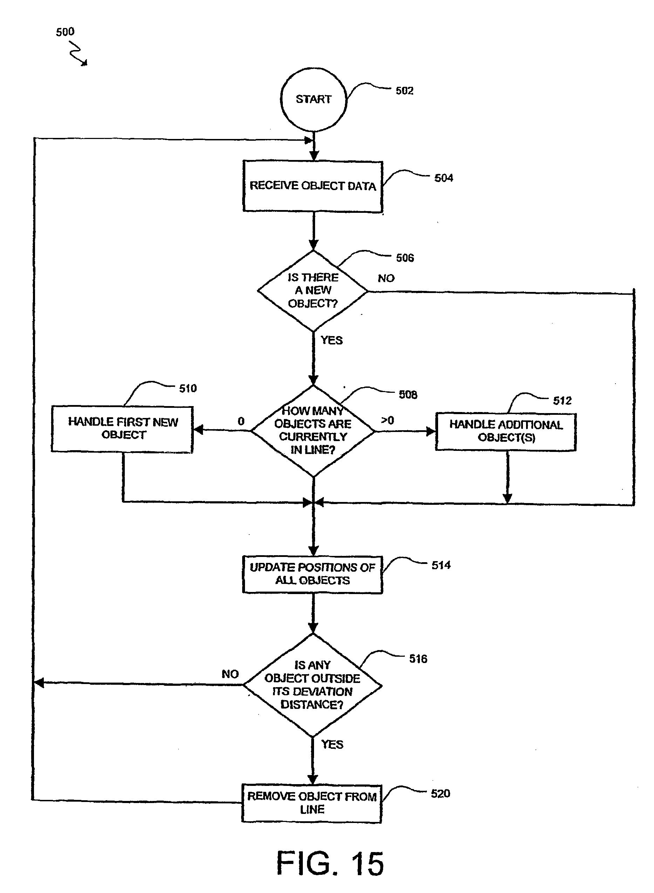

Referring to FIGS. 15-17, one method 500 of analyzing object data with reference to the line behavior pattern parameters is described in greater detail. After the start 502 of the method, the object analysis system 130 may receive 504 object data including object identifying data and object location data. Based on the object data (e.g., the object identifying data), the object analysis system 130 may determine 506 if there are any new objects in the surveillance area relative to the objects previously identified.

If there is not a new object, then the object analysis system may update 514 positions of all objects based on the received object location data. The object analysis system may then determine 516 if any object designated as "in line" is outside its deviation distance. If an object is outside the deviation distance, the object analysis system may remove 520 the object from the line.

If there is a new object, the object analysis system may determine 508 how many objects are currently in line. If no objects are currently in line and the new object may be the first object in line, the object analysis system handles 510 the analysis of the object data for a first new object, as will be described in greater detail below. If there is at least one object currently in line and the new object may be an additional object in line, the object analysis system handles 512 the analysis of the object data as an additional object, as will be described in greater detail below. When the handling of the object data analysis for the first new object and the additional object is completed, the object analysis system may update 514 positions of all objects and may determine 516 if any objects have deviated from the deviation distance.

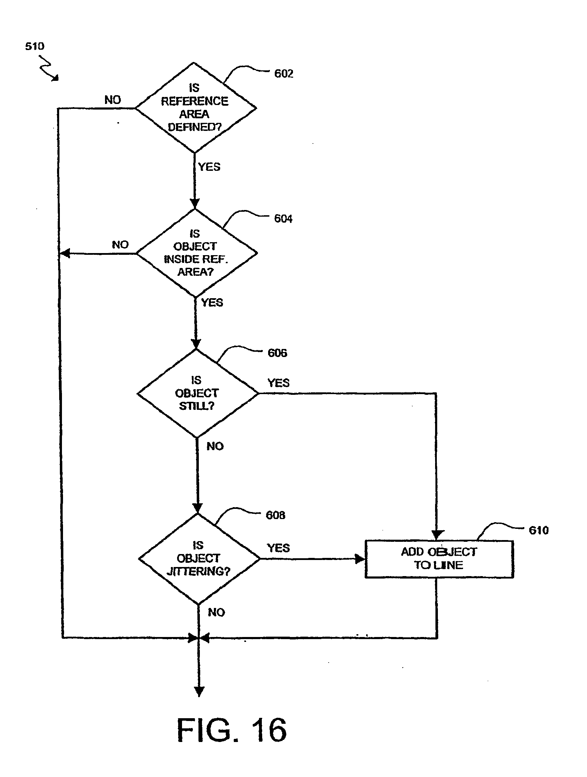

FIG. 16 illustrates one method of handling 510 the analysis of object data for a first object where no objects are currently designated as being in line. The object analysis system may determine 602 if a reference area is defined, and if the reference area is defined, may determine 604 if the object is inside the reference area. If the object is inside the reference area, the object analysis system may determine 606 if the object is still for a particular still time period. If is the object in the reference area is determined to be still, the object analysis system may add 610 that object as the first object in a line. If the object is not determined to be still, the object analysis system may determine 608 if the object is jittering within a jitter space. If the object in the reference area is determined to be jittering, the object analysis system may add 610 that object as the first object in a line. If the object is not in the reference area, not still and not jittering, then the object may not be added as the first object in a line.

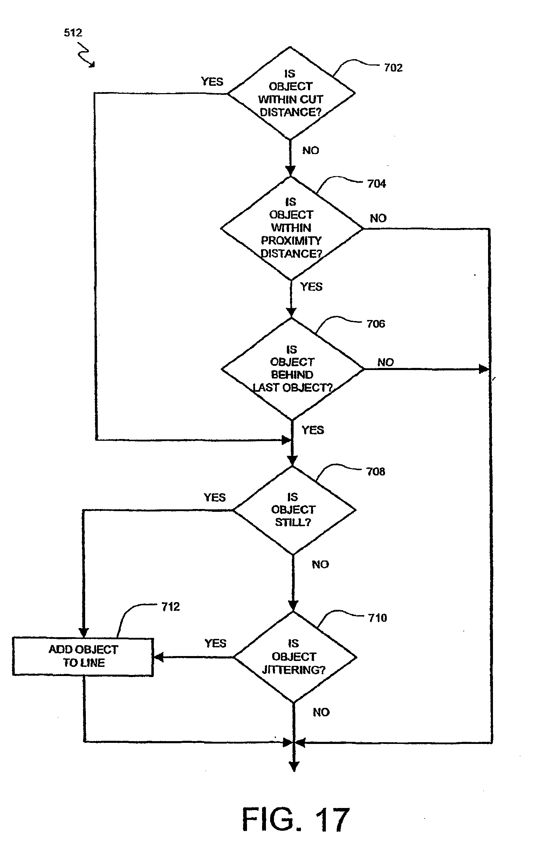

FIG. 17 illustrates one method of handling 512 the analysis of object data for additional objects when there is at least one object already designated as being in line. The object analysis system may determine 702 if the new object is within the cut distance as defined by the cut parameter. If the additional object is not within the cut distance, the object analysis system may determine 704 if the additional object is within a proximity distance to the last object currently in line. If the object is within the proximity distance, the object analysis system may also determine 706 if the additional object is behind the last object currently in line.

If the additional object is determined to be either within the cut distance or within the proximity distance and behind the last object currently in line, the object analysis system may determine 708 if the additional object is still. If the additional object is determined to be still, the object analysis system may add 712 the additional object to the line. If the object is not determined to be still, the object analysis system may determine 710 if the additional object is jittering about a jitter space. If the object is jittering, the object analysis system may add 712 the additional object to the line. If the additional object does not meet any of these parameters, the additional object may not be added to the line.

Various implementations of the object analysis system and method may utilize one or more of the defined line behavior pattern parameters depending on the actual implementation circumstances. Other line pattern behavior parameters may also be implemented in the object analysis system. The line pattern behavior parameters may also be analyzed in a different sequence than described herein.

The line statistics may be calculated as the object analysis system adds objects and removes objects from the line. A line count may be determined, for example, by calculating a number of objects designated as "in line" at any time. The average wait may be determined, for example, by calculating an average period of time that each object is designated as "in line." The volume moving through the line may be determined, for example, by calculating a number of objects designated as "in line" during a time period. The line statistics may then be displayed and/or used to provide notifications or alarms, as described above.

Consistent with embodiments of the present invention, a line monitoring method and system may be used to monitor objects in a line. The line monitoring method may include receiving object data associated with objects in a surveillance area. The object data may include at least object identifying data and object location data. The method may also include analyzing the object data with reference to at least one line behavior pattern parameter representing at least one behavior pattern indicative of objects in line to determine if at least one of the objects should be designated as in a line in the surveillance area. The method may further include determining at least one line statistic associated with objects designated as in the line.

The line monitoring system may include an object identifying and locating system configured to identify and locate objects in a surveillance area and to generate object data comprising at least object identifying data and object location data. The line monitoring method may also include an object analysis system configured to receive the object data, to analyze the object data to determine if at least one of the objects should be designated as in a line in the surveillance area, and to determine at least one line statistic associated with the line.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Other modifications, variations, and alternatives are also possible. Accordingly, the claims are intended to cover all such equivalents.

## Claims

1. A line monitoring method comprising:
receiving object data (304) associated with objects (102) in a surveillance area (104) by an object identifying and locating system (120); and
analyzing said object data (304) with reference to at least one line behavior pattern parameter defining a reference area (400) in said surveillance area (104) by an object analysis system (130);
representing at least one behavior pattern indicative of objects (102) in line to determine if at least one of said objects (102) should be designated as in a line in said surveillance area (104); and
determining at least one line statistic (306) associated with objects (102) designated as in said line,
**characterized in that**
- said object data comprising at least object identifying data and object location data to associate the image object at a coordinate in the image (200) with a specific corresponding object in the area (104),
- wherein the object identifying data are maintained as the object (102) moves; and
- wherein an object (102) comprising said object identifying data is designated as to be in line if the location of the object has not changed for a still time period or if the object location data indicates that the object in the reference area (400) moves only within a defined jitter space.

2. The method of claim 1, further comprising ascertaining if at least one of said objects (102) is a new object (506) in said surveillance area (104), and if said at least one of said objects (102) is a new object, said object data is analyzed for said new object (510) to determine if said new object (102) should be designated as in said line.

3. The method of claim 2, wherein analyzing said object data (304) for said new object (102) comprises determining if said object (102) is a first new object or an additional new object, and wherein said object data is analyzed based on whether said new object (102) is a first new object or an additional new object.

4. The method of claim 1, wherein analyzing said object data (304) for said first new object (102) comprises analyzing said object location data with reference to a parameter defining movement indicative of objects being in a line.

5. The method of claim 3, wherein analyzing said object data (304) for said additional new object (102) comprises analyzing said object location data with reference to a parameter defining a position of an object relative other objects in said line.

6. The method of claim 5, wherein analyzing said object data (304) for said additional new object (102) comprises analyzing said object location data with reference to a parameter defining movement indicative of objects being in a line.

7. The method of claim 1, wherein analyzing said object data (304) include analyzing said object data with reference to a parameter defining a position of an object relative to said line to determine if said object (102) should be designated as removed from said line.

8. The method of claim 1, wherein determining said at least one line statistic (306) includes determining a number of objects (102) in said line.

9. The method of claim 1, wherein determining said at least one line statistic (306) includes determining an average wait time of objects (102) in said line or a volume of objects (102) moving through said line during a time period.

10. A line monitoring system (100) comprising:
an object identifying and locating system (120) configured to identify and locate objects (102) in a surveillance area (104) and to generate object data comprising at least object identifying data and object location data; and
an object analysis system (130) configured to receive said object data, to analyze said object data to determine with reference to at least one line behavior parameter defining a reference area (400) if at least one of said objects (102) should be designated as in a line in said surveillance area, and to determine at least one line statistic associated with said line,
**characterized in that**
- said object data comprising at least object identifying data and object location data to associate the image object at a coordinate in the image with a specific corresponding object in the surveillance area (104), wherein said object identifying and locating system comprises:
- at least one camera (122) configured to generate an image signal representing at least one image of said surveillance area; and
- an object extraction system (124) configured to receive said image signal, to extract objects (102) from said at least one image represented by said image signal, and to generate said object data including said object identifying data,
- wherein said object extraction system (124) maintains said identifying data as the image object moves in said reference area (400),
- wherein an object (102) comprising said object identifying data is designated by the object analysis system (130) as to be in line if the location of the object has not changed for a still time period or if the object location data indicates that the object in the reference area (400) moves only within a defined jitter space.

11. The line monitoring system (100) of claim 10, wherein said at least one line behavior pattern parameter includes a parameter defining a position of objects (102) relative to other objects (102) in said line.

12. The line monitoring system of claim 11, wherein said at least one line statistic includes a number of objects (102) in said line.

13. The line monitoring system of claim 10, wherein said object identifying and locating system (120) and said object analysis system (130) include at least one computer system (142).

## Patentansprüche

1. Reihen-Überwachungsverfahren, das Folgendes umfasst:
Empfangen von Objektdaten (304), die Objekten (102) in einem Beobachtungsbereich (104) zugeordnet sind, durch ein Objektidentifizierungs- und Objektlokalisierungssystem (120); und
Analysieren der Objektdaten (304) in Bezug auf wenigstens einen Reihen-Verhaltensmusterparameter, der einen Referenzbereich (400) in dem Beobachtungsbereich (104) liefert, durch ein Objektanalysesystem (130);
Darstellen wenigstens eines Verhaltensmusters, das Objekte (102) in der Reihe angibt, um zu bestimmen, ob wenigstens eines der Objekte (102) als in einer Reihe in dem Beobachtungsbereich (104) befindlich bezeichnet werden sollte; und
Bestimmen wenigstens einer Reihenstatistik (306), die Objekten (102) zugeordnet ist, die als in der Reihe befindlich bezeichnet werden,
**dadurch gekennzeichnet, dass**
- die Objektdaten wenigstens Objektidentifizierungsdaten und Objektlokalisierungsdaten enthalten, um dem Bildobjekt bei einer Koordinate in dem Bild (200) ein spezifisches entsprechendes Objekt in dem Bereich (104) zuzuordnen,
- wobei die Objektidentifizierungsdaten beibehalten werden, wenn sich das Objekt (102) bewegt; und
- wobei ein Objekt (102), das die Objektidentifizierungsdaten enthält, als in der Reihe befindlich bezeichnet wird, falls sich der Ort des Objekts für eine Ruhezeitperiode nicht geändert hat oder falls die Objektlokalisierungsdaten angeben, dass sich das Objekt in dem Referenzbereich (400) nur innerhalb eines definierten Schwankungsraums bewegt.

2. Verfahren nach Anspruch 1, das ferner das Sicherstellen, dass wenigstens eines der Objekte (102) ein neues Objekt (506) in dem Beobachtungsbereiche (104) ist, umfasst, wobei dann, wenn das wenigstens das eine der Objekte (102) ein neues Objekt ist, die Objektdaten auf das neue Objekt (510) analysiert werden, um zu bestimmen, ob das neue Objekt (102) als in der Reihe befindlich bezeichnet werden sollte.

3. Verfahren nach Anspruch 2, wobei das Analysieren der Objektdaten (304) in Bezug auf das neue Objekt (102) das Bestimmen, ob das Objekt (102) ein erstes neues Objekt oder ein weiteres neues Objekt ist, umfasst, wobei die Objektdaten anhand der Tatsache analysiert werden, ob das neue Objekt (102) ein erstes neues Objekt oder ein weiteres neues Objekt ist.

4. Verfahren nach Anspruch 1, wobei das Analysieren der Objektdaten (304) in Bezug auf das erste neue Objekt (102) das Analysieren der Objektortsdaten in Bezug auf einen Parameter, der eine Bewegung definiert, die in einer Reihe befindliche Objekte angibt, umfasst.

5. Verfahren nach Anspruch 3, wobei das Analysieren der Objektdaten (304) in Bezug auf das weitere neue Objekt (102) das Analysieren der Objektlokalisierungsdaten in Bezug auf einen Parameter, der eine Position eines Objekts relativ zu anderen Objekten in der Reihe definiert, umfasst.

6. Verfahren nach Anspruch 5, wobei das Analysieren der Objektdaten (304) in Bezug auf das weitere neue Objekt (102) das Analysieren der Objektortsdaten in Bezug auf einen Parameter, der eine Bewegung definiert, die in einer Reihe befindliche Objekte angibt, umfasst.

7. Verfahren nach Anspruch 1, wobei das Analysieren der Objektdaten (304) das Analysieren der Objektdaten in Bezug auf einen Parameter, der eine Position eines Objekts relativ zu der Reihe definiert, umfasst, um zu bestimmen, ob das Objekt (102) als aus der Reihe entfernt bezeichnet werden sollte.

8. Verfahren nach Anspruch 1, wobei das Bestimmen der wenigstens einen Reihenstatistik (306) das Bestimmen einer Anzahl von Objekten (102) in der Reihe umfasst.

9. Verfahren nach Anspruch 1, wobei das Bestimmen der wenigstens einen Reihenstatistik (306) das Bestimmen einer durchschnittlichen Wartezeit von Objekten (102) in der Reihe oder eines Volumens von Objekten (102), die sich während einer Zeitperiode durch die Reihe bewegen, umfasst.

10. Reihen-Überwachungssystem (100), das Folgendes umfasst:
ein Objektidentifizierungs- und Objektlokalisierungssystem (120), das konfiguriert ist, Objekte (102) in einem Beobachtungsbereich (104) zu identifizieren und zu lokalisieren und Objektdaten zu erzeugen, die wenigstens Objektidentifizierungsdaten und Objektlokalisierungsdaten enthalten; und
ein Objektanalysesystem (130), das konfiguriert ist, die Objektdaten zu empfangen, die Objektdaten zu analysieren, um in Bezug auf wenigstens einen Reihen-Verhaltensparameter, der einen Referenzbereich (400) definiert, zu bestimmen, ob wenigstens eines der Objekte (102) als in einer Reihe in dem Beobachtungsbereich befindlich bezeichnet werden sollte, und um wenigstens eine Reihenstatistik, die der Reihe zugeordnet ist, zu bestimmen,
**dadurch gekennzeichnet, dass**
- die Objektdaten wenigstens Objektidentifizierungsdaten und Objektlokalisierungsdaten enthalten, um das Bildobjekt bei einer Koordinate in dem Bild einem spezifischen entsprechenden Objekt in dem Beobachtungsbereich (104) zuzuordnen, wobei das Objektidentifizierungs- und Objektlokalisierungssystem Folgendes umfasst:
- wenigstens eine Kamera (122), die konfiguriert ist, ein Bildsignal zu erzeugen, das wenigstens ein Bild des Beobachtungsbereichs darstellt; und
- ein Objektextraktionssystem (124), das konfiguriert ist, das Bildsignal zu empfangen, Objekte (102) aus dem wenigstens einen Bild, das durch das Bildsignal dargestellt wird, zu extrahieren und die Objektdaten, die die Objektidentifizierungsdaten enthalten, zu erzeugen,
- wobei das Objektextraktionssystem (124) die Identifizierungsdaten beibehält, wenn sich das Bildobjekt in dem Referenzbereich (400) bewegt,
- wobei ein Objekt (102), das die Objektidentifizierungsdaten enthält, durch das Objektanalysesystem (130) als in der Reihe befindlich bezeichnet wird, falls sich der Ort des Objekts für eine Ruhezeitperiode nicht geändert hat oder falls die Objektlokalisierungsdaten angeben, dass sich das Objekt in dem Referenzbereich (400) nur innerhalb eines definierten Schwankungsraums bewegt.

11. Reihen-Überwachungssystem (100) nach Anspruch 10, wobei der wenigstens eine Reihen-Verhaltensmusterparameter einen Parameter enthält, der eine Position von Objekten (102) relativ zu anderen Objekten (102) in der Reihe definiert.

12. Reihen-Überwachungssystem nach Anspruch 11, wobei die wenigstens eine Reihenstatistik eine Anzahl von Objekten (102) in der Reihe enthält.

13. Reihen-Überwachungssystem nach Anspruch 10, wobei das Objektidentifizierungs- und Objektlokalisierungssystem (120) und das Objektanalysesystem (130) wenigstens ein Computersystem (142) enthalten.

## Revendications

1. Procédé de surveillance de ligne comprenant :
la réception de données d'objet (304) associées à des objets (102) dans une zone de surveillance (104) par un système d'identification et localisation d'objet (120) ; et
l'analyse desdites données d'objet (304) en référence à au moins un paramètre de tendance de comportement de ligne définissant une zone de référence (400) dans ladite zone de surveillance (104) par un système d'analyse d'objet (130) ;
la représentation d'au moins une tendance de comportement indicative d'objets (102) dans une ligne pour déterminer si au moins l'un desdits objets (102) doit être désigné ou non comme se trouvant dans une ligne dans ladite zone de surveillance (104) ; et
la détermination d'au moins une statistique de ligne (306) associée à des objets (102) désignés comme se trouvant dans ladite ligne,
**caractérisé en ce que**
- lesdites données d'objet comprennent au moins des données d'identification d'objet et des données de position d'objet pour associer l'objet de l'image se trouvant à une coordonnée dans l'image (200) à un objet correspondant spécifique dans la zone (104),
- dans lequel les données d'identification d'objet sont tenues à jour au fur et à mesure du mouvement de l'objet (102) ; et
- dans lequel un objet (102) comprenant lesdites données d'identification d'objet est désigné comme se trouvant dans la ligne si la position de l'objet n'a pas changé pendant une période de temps d'immobilisation ou si les données de position d'objet indiquent que l'objet dans la zone de référence (400) se déplace uniquement dans un espace de gigue défini.

2. Procédé selon la revendication 1, comprenant en outre la détermination qu'au moins l'un desdits objets (102) est ou non un nouvel objet (506) dans ladite zone de surveillance (104), et si ledit au moins un desdits objets (102) est un nouvel objet, lesdites données d'objet dudit nouvel objet (510) sont analysées pour déterminer que ledit nouvel objet (102) doit ou non être désigné comme se trouvant dans ladite ligne.

3. Procédé selon la revendication 2, dans lequel l'analyse desdites données d'objet (304) dudit nouvel objet (102) comprend la détermination que ledit objet (102) est un premier nouvel objet ou un nouvel objet supplémentaire, et dans lequel lesdites données d'objet sont analysées selon que ledit nouvel objet (102) est un premier nouvel objet ou un nouvel objet supplémentaire.

4. Procédé selon la revendication 1, dans lequel l'analyse desdites données d'objet (304) dudit premier nouvel objet (102) comprend l'analyse des données de position dudit objet en référence à un paramètre définissant un mouvement indicatif d'objet se trouvant dans une ligne.

5. Procédé selon la revendication 3, dans lequel l'analyse desdites données d'objet (304) dudit nouvel objet supplémentaire (102) comprend l'analyse des données de position dudit objet en référence à un paramètre définissant une position d'un objet par rapport à d'autres objets dans ladite ligne.

6. Procédé selon la revendication 5, dans lequel l'analyse desdites données d'objet (304) dudit nouvel objet supplémentaire (102) comprend l'analyse des données de position dudit objet en référence à un paramètre définissant un mouvement indicatif d'objet se trouvant dans une ligne.

7. Procédé selon la revendication 1, dans lequel l'analyse desdites données d'objet (304) comprend l'analyse desdites données d'objet en référence à un paramètre définissant une position d'un objet par rapport à ladite ligne pour déterminer que ledit objet (102) doit être ou non désigné comme éliminé de ladite ligne.

8. Procédé selon la revendication 1, dans lequel la détermination de ladite au moins une statistique de ligne (306) comporte la détermination d'un nombre d'objet (102) dans ladite ligne.

9. Procédé selon la revendication 1, dans lequel la détermination de ladite au moins une statistique de ligne (306) comporte la détermination d'un temps d'attente moyen d'objets (102) dans ladite ligne ou d'un volume d'objets (102) se déplaçant dans ladite ligne durant une période de temps.

10. Système de surveillance de ligne (100) comprenant :
un système d'identification et de localisation d'objet (120) configuré pour identifier et localiser des objets (102) dans une zone de surveillance (104) et générer des données d'objet comprenant au moins des données d'identification d'objet et des données de localisation d'objet ; et
un système d'analyse d'objet (130) configuré pour recevoir lesdites données d'objet, analyser lesdites données d'objet en référence à au moins un paramètre de tendance de comportement de ligne définissant une zone de référence (400) si au moins l'un desdits objets (102) est à désigner comme se trouvant dans ladite zone de surveillance, et déterminer au moins une statistique de ligne associée à ladite ligne,
**caractérisé en ce que**
- lesdites données d'objet comprennent au moins des données d'identification d'objet et des données de position d'objet pour associer l'objet de l'image se trouvant à une coordonnée dans l'image à un objet correspondant spécifique dans la zone de surveillance (104),
dans lequel le système d'identification et de localisation d'objet comprend :
- au moins une caméra (122) configurée pour générer un signal d'image représentant au moins une image de ladite zone de surveillance ; et
- un système d'extraction d'objet (124) configuré pour recevoir ledit signal d'image, afin d'extraire des objets (102) de ladite au moins une image représentée par ledit signal d'image, et générer lesdites données d'objet comportant lesdites données d'identification d'objet,
- dans lequel ledit système d'extraction d'objet (124) tient à jour lesdites données d'identification au fur et à mesure du mouvement de l'objet de l'image dans ladite zone de référence (400),
- dans lequel un objet (102) comprenant lesdites données d'identification d'objet est désigné par le système d'analyse d'objet (130) comme se trouvant dans la ligne si la position de l'objet n'a pas changé pendant une période de temps d'immobilisation ou si les données de position d'objet indiquent que l'objet dans la zone de référence (400) se déplace uniquement dans un espace de gigue défini.

11. Système de surveillance de ligne (100) selon la revendication 10, dans lequel ledit au moins un paramètre de tendance de comportement de ligne comporte un paramètre définissant une position d'objets (102) par rapport à d'autres objets (102) dans ladite ligne.

12. Système de surveillance de ligne selon la revendication 11, dans lequel ladite au moins une statistique de ligne comporte un nombre d'objets (102) dans ladite ligne.

13. Système de surveillance de ligne selon la revendication 10, dans lequel ledit système d'identification et de localisation d'objet (120) et ledit système d'analyse d'objet (130) comportent au moins un système informatique (142).
